# EUROPÄISCHE PATENTSCHRIFT

(11) **EP 3 176 760 B1**
(45) Veröffentlichungstag und Bekanntmachung des Hinweises auf die Patenterteilung: **16.05.2018**
(21) Anmeldenummer: 16002732.2
(22) Anmeldetag: 11.03.2015
(51) Int. Cl.: G07C 9/00, B60R 25/00

(54) **Verfahren zum ablegen einer Sendung in einem Kraftfahrzeug**
Method for storing a package in a motor vehicle
Procédé destiné à déposer un envoi dans un véhicule automobile

(30) Priorität: 31.03.2014 DE 102014004673
(43) Veröffentlichungstag der Anmeldung: 07.06.2017
(62) Teilanmeldung aus: 15711425.7
(73) Patentinhaber: Audi AG, 85045 Ingolstadt (DE)
(72) Erfinder: Stark, Christiane, 85123 Karlskron (DE); Hainzlmaier, Andre, 85290 Geisenfeld (DE); Enning, Martin, 85049 Ingolstadt (DE); Schweitzer, Michael, 85283 Wolnzach (DE)
(74) Vertreter: Bauer, Dominik Michael

(56) Entgegenhaltungen:
- DE-A1- 19 953 622
- DE-A1-102011 018 901
- DE-A1-102011 089 496
- JP-A- 2006 206 225
- Volvo Car Group: "Volvo Cars demonstrates the potential of connected cars with deliveries direct to people's cars - Volvo Car Group Global Media Newsroom", , 20. Februar 2014 (2014-02-20), XP055191575, Gefunden im Internet: URL:https://www.media.volvocars.com/global /en-gb/media/pressreleases/139114/volvo-ca rs-demonstrates-the-potential-of-connected -cars-with-deliveries-direct-to-peoples-ca rs [gefunden am 2015-05-26]

## Beschreibung

Die Erfindung betrifft ein Verfahren zum Ablegen einer Sendung in einem Kraftfahrzeug. Weltweit nimmt der Einkauf über Online-Handelsplattformen stetig zu. Dabei wird es von Kunden derartiger Plattformen als Nachteil empfunden, dass Paketdienste häufig in Zeiträumen liefern, in denen der Kunde nicht zu Hause ist. Daher ist es häufig notwendig, dass sich Kunden Pakete zu Paketstationen oder Filialen eines Zustelldienstes liefern lassen oder dass Pakete an Nachbarn oder Bekannte zugestellt werden. Dies führt zum einen zu einem erheblichen Mehraufwand für die Kunden, zum anderen entstehen durch unzustellbare oder nicht direkt zustellbare Pakte Zusatzkosten für Zustelldienste.

Die Internetseite www.cardrops.com schlägt vor, Waren in ein Kraftfahrzeug zu liefern. Hierzu ist der Kofferraum eines Kraftfahrzeugs ferngesteuert öffenbar.

Die Druckschrift DE 10 2011 018 901 A1 offenbart ein Verfahren zur Betätigung eines Kraftfahrzeugschließsystems durch einen Dienstleistungsanbieter oder einen Dienstleistungsempfänger. Nach einem Anfordern einer Service-Dienstleistung wird zumindest ein Passcode zur Betätigung des Kraftfahrzeugschließsystems von dem Kraftfahrzeugeigentümer an den Dienstleistungsempfänger oder den Dienstleistungsanbieter übermittelt, der nicht Kraftfahrzeugeigentümer ist. Ergänzend wird die Position des Kraftfahrzeugs übermittelt. Der Nichtkraftfahrzeugeigentümer wird durch den Passcode authentifiziert, wonach das Kraftfahrzeugschließsystem betätigt wird. Das Kraftfahrzeug kann als personalisierter Lagerraum mit persönlicher Zustellung genutzt werden.

Die Druckschrift JP 2006 206225 A betrifft ein Verfahren zum Empfang von Sendungen mit Hilfe eines Fahrzeugs. Die zum Empfang erforderlichen Informationen, nämlich eine Parkposition sowie eine Identifikationsinformation, werden vor der Versendung auf einem Informationsserver registriert. Im Rahmen der Lieferung erfolgt eine Authentifizierung gegenüber einer fahrzeugseitigen Einrichtung mit Hilfe einer Einrichtung des Lieferfahrzeugs, wonach eine Verriegelung eines Kofferraums aufgehoben wird.

Ein weiteres System zur Übermittlung von Sendungen zu Fahrzeugen ist aus der Druckschrift DE 10 2011 089 496 A1 bekannt. Eine Berechtigungsfreigabe zum Öffnen mindestens einer Tür und/oder eines Kofferraums des Fahrzeugs wird an ein Kommunikationsendgerät des Lieferanten übertragen. Durch Übermittlung eines Funksignals, das die Berechtigungsfreigabe enthält, an das Fahrzeug erfolgt ein Öffnen mindestens einer Tür und/oder eines Kofferraums des Fahrzeugs.

Die Druckschrift DE 199 53 622 A1 offenbart ein Verfahren zum Betreiben eines Warenversandsystems mit einer Vielzahl von Warencontainern. Die Warencontainer weisen jeweils eine Schließeinrichtung, eine Speichereinrichtung, eine Leseeinrichtung und eine Vergleichseinrichtung auf. Ein Zugangscode wird in der Speichereinrichtung gespeichert. Zum Zugriff auf den Warencontainer sind Liefercodes aus einem Datenträger auslesbar. Diese werden mit den Zugangscodes verglichen, wonach bei einer Übereinstimmung ein Entriegeln der Schließeinrichtung des Warencontainers erfolgt.

Der Erfindung liegt damit die Aufgabe zugrunde, ein demgegenüber verbessertes Verfahren anzugeben, um Sendungen an einen Kunden zu liefern, wobei eine hohe Sicherheit und ein hoher Komfort erreicht werden sollen.

Die Aufgabe wird erfindungsgemäß durch ein Verfahren der eingangs genannten Art gelöst, das die folgenden Schritte umfasst:
- Generieren eines temporären digitalen Schlüssels, der in einem vorgegebenen Zeitintervall einmalig oder mehrmals Zugang zu dem Kraftfahrzeug erlaubt, durch eine Zentraleinrichtung,
- Übertragen des digitalen Schlüssels über eine Kommunikationseinrichtung des Kraftfahrzeugs an eine Steuerungseinrichtung des Kraftfahrzeugs und Speichern des Schlüssels in der Steuerungseinrichtung,
- Übertragen einer der Sendung zugeordneten Authentifizierungsinformation, die dem digitalen Schlüssel oder einer dem digitalen Schlüssel zugeordneten Information entspricht, auf ein Authentifizierungselement,
- Transport der Sendung zum Kraftfahrzeug,
- Erfassen der Authentifizierungsinformation oder einer aus der Authentifizierungsinformation abgeleiteten Information durch ein Lesegerät des Kraftfahrzeugs,
- Ansteuern einer Fahrzeugeinrichtung zur Ermöglichung des Zugangs zu zumindest einem Teil des Kraftfahrzeuginnenraums durch die Steuerungseinrichtung bei Erfüllung einer sowohl die Authentifizierungsinformation bzw. die abgeleitete Information als auch den digitalen Schlüssel auswertenden Authentifizierungsbedingung, und
- Ansteuern der Fahrzeugeinrichtung und/oder einer weiteren Fahrzeugeinrichtung zum Schließen des Kraftfahrzeugs nach dem Ablegen der Sendung in dem Kraftfahrzeug oder nach einer vorgegebenen Wartezeit,
wobei das Kraftfahrzeug eine Positionserfassungseinrichtung umfasst, wobei ständig oder bei Erfüllung einer vorgegebenen Übertragungsbedingung durch die Positionserfassungseinrichtung die Positionsdaten des Kraftfahrzeugs erfasst und an die Zentraleinrichtung übertragen werden, wonach die Zentraleinrichtung ein zeitabhängiges Profil der Positionsdaten speichert, wonach durch die Zentraleinrichtung bei Vorliegen einer zuzustellenden Sendung ein wahrscheinlicher Aufenthaltsort des Kraftfahrzeugs zum Lieferzeitpunkt bestimmt und für den Zusteller bereitstellt wird.

Erfindungsgemäß wird vorgeschlagen, eine Sendung im Kraftfahrzeug eines Adressaten abzulegen. Um dabei ein hohes Maß an Sicherheit zu gewährleisten, wird der Zugang zu dem Kraftfahrzeug durch einen digitalen Schlüssel ermöglicht, der nur für ein vorgegebenes Zeitintervall, insbesondere um einen vorgegebenen Lieferzeitpunkt, gültig ist. Dabei kann der Schlüssel selbst das Zeitintervall umfassen. Hierzu kann das Zeitintervall explizit einen Teil des Schlüssels darstellen. Es ist jedoch auch möglich, dass eine implizite Zeitcodierung des Schlüssels erfolgt, beispielsweise indem gewisse Gruppen von Schlüsseln ein verfahrensimmanentes Gültigkeitsdatum aufweisen. Alternativ oder ergänzend hierzu kann zusätzlich zu dem digitalen Schlüssel das vorgegebene Zeitintervall an die Steuereinrichtung des Kraftfahrzeugs übertragen werden oder die Steuereinrichtung des Kraftfahrzeugs kann bei Empfang des Schlüssels ein vorgegebenes Zeitintervall ab dem Empfangszeitpunkt festsetzen. Das Zeitintervall kann im erfindungsgemäßen Verfahren beispielsweise 48 Stunden betragen.

Insbesondere ist es möglich, dass die Steuerungseinrichtung des Kraftfahrzeugs den digitalen Schlüssel nach einer einmaligen Nutzung markiert oder löscht, um eine mehrmalige Nutzung dieses digitalen Schlüssels zu verhindern.

Wenn das erfindungsgemäße Verfahren im Rahmen einer Bestellung oder einer anderen Paketsendung genutzt wird, ist es insbesondere möglich, dass einem Fahrzeugnutzer bzw. einem Kraftfahrzeug eine eindeutige Kraftfahrzeugkennung zugeordnet ist. Wird eine derartige Kraftfahrzeugkennung bei einer Bestellung oder einer anderen Sendung als Lieferadresse eingegeben, so erfolgt, insbesondere automatisch ohne ein weiteres Eingreifen des Bestellers bzw. des Versenders, eine Lieferung der Sendung zum Kraftfahrzeug. Hierzu ist es insbesondere möglich, dass für den Fahrzeugnutzer bzw. das Kraftfahrzeug ein Profil auf der Zentraleinrichtung abgelegt ist. Dieses Profil kann neben einer eindeutigen Kennzeichnung des Kraftfahrzeugs insbesondere Kontaktdaten des Kunden umfassen. In diesem Fall kann bei einem erfolgreichen Ablegen der Sendung automatisch eine Nachricht an den Kunden, beispielsweise über eine SMS, eine E-Mail oder eine Anwendung, insbesondere eines Mobilkommunikationsgeräts, zugestellt werden.

Zusätzlich können in einem derartigen Profil vorteilhaft alternative Zustellmöglichkeiten gespeichert sein. Eine derartige alternative Zustellmöglichkeit kann insbesondere dann genutzt werden, wenn eine Lokalisierung des Kraftfahrzeugs vor oder während des Transports zur Sendung zum Kraftfahrzeug nicht möglich ist. Alternative Zustellmöglichkeiten können auch genutzt werden, wenn das Kraftfahrzeug vor oder während des Transports der Sendung zum Kraftfahrzeug in einem Bereich abgestellt ist, in dem es nicht für den Zusteller zugänglich ist. Alternative Zustellmöglichkeiten, also Rückfallebenen für das erfindungsgemäße Verfahren, können eine Lieferung der Sendung zur Wohnung des Fahrzeugnutzers, an eine bestimmte Paketstation, an eine Filiale eines Zustelldienstes und/oder an einen Nachbarn sein. Dabei können in einem entsprechenden Profil auch Prioritäten für bestimmte Zustellmöglichkeiten angegeben werden.

Zusätzlich oder alternativ zu den genannten Möglichkeiten kann im erfindungsgemäßen Verfahren vorgesehen sein, die Sendung in einem anderen Kraftfahrzeug abzulegen, dessen Kraftfahrzeugkennung insbesondere in dem Profil auf der Zentraleinrichtung gespeichert ist. Hierzu kann vorgesehen sein, dass ein Fahrzeugnutzer des entsprechenden Kraftfahrzeugs einer derartigen Ablage zustimmen muss, was beispielsweise über einen Eintrag in einem dem weiteren Kraftfahrzeug zugeordneten Profil auf der Zentraleinrichtung oder über eine Anfrage über ein beliebiges Kommunikationsmittel, beispielsweise SMS oder E-Mail möglich ist.

Für Zustelldienste ist eine Nachweisbarkeit wesentlich, dass eine Sendung auch tatsächlich zugestellt bzw. an einem bestimmten Ort abgelegt wurde. Daher ist es möglich, dass die Steuerungseinrichtung nach dem Ablegen, also insbesondere beim Schließen des Kraftfahrzeugs, zusätzlich das Ablegen der Sendung bestätigt. Eine derartige Bestätigung ist insbesondere durch das Senden einer Nachricht zur Zentraleinrichtung möglich. Alternativ kann eine Bestätigung auch an ein einem Zusteller zugeordnetes Gerät übertragen oder beispielsweise in Papierform bereitgestellt werden. Dabei ist es ergänzend möglich, dass das Ablegen der Sendung direkt durch Kraftfahrzeugsensoren, beispielsweise Gewichtssensoren oder eine Kamera, zu erfassen.

Als Authentifizierungselement kann eine auf der Sendung aufgebrachte optische Kodierung der Authentifizierungsinformation genutzt werden, wobei die Authentifizierungsinformation durch das Lesegerät optisch erfasst wird. Das Lesegerät kann dabei insbesondere eine Kamera des Kraftfahrzeugs, beispielsweise eine Rückfahrkamera, sein. Insbesondere kann als Authentifizierungselement der digitale Schlüssel als eindimensionales oder zweidimensionales Muster mit insbesondere zwei Tonwerten auf die Sendung aufgebracht werden. Ein derartiges Aufbringen ist insbesondere als Strichcode oder zweidimensionaler Code, beispielsweise als QR Code®, möglich. Eine optische Codierung auf der Sendung ermöglicht zum einen ein besonders einfaches Kennzeichen der Sendung, da eine derartige optische Codierung beispielsweise als Teil eines Etiketts auf der Sendung aufgebracht werden kann. Zum anderen sind in Kraftfahrzeugen typischerweise bereits mehrere Kameras vorhanden, die in diesem Fall als optisches Lesegerät dienen können. Das erfindungsgemäße Verfahren kann also mit minimalem technischen Aufwand umgesetzt werden.

Alternativ ist es möglich, dass als Authentifizierungselement eine der Sendung zugeordnete Transpondereinrichtung genutzt wird, wobei die Authentifizierungsinformation bzw. die abgeleitete Information durch eine Kommunikation des Lesegeräts mit der Transpondereinrichtung erfasst wird. Die Transpondereinrichtung kann insbesondere an der Sendung angebracht sein. Beispielsweise kann die Transpondereinrichtung in ein Etikett der Sendung oder in eine Verpackung der Sendung integriert sein. Als Transpondereinrichtung kann dabei insbesondere ein RFID-Chip oder ein NFC-Chip genutzt werden. RFID (radio-frequency identification, Identifizierung mit Hilfe elektromagnetischer Wellen) beschreibt ein Verfahren, bei dem kleine RFID-Chips, die Transponder sind, genutzt werden, um drahtlos Identifikationsinformationen zu übertragen. Eine derartige Übertragung ist über eine Reichweite von einigen 10 Zentimetern bis zu wenigen Metern möglich. Alternativ hierzu kann Nahfeldkommunikation (near field communication, NFC) genutzt werden, um Identifizierungsinformationen zu übertragen. Wesentlicher Unterschied zwischen der Nutzung eines RFID-Chips und der Nutzung eines NFC-Chips die mögliche Übertragungsreichweite, die im Fall eines NFC-Chips auf wenige Zentimeter begrenzt ist.

Vorteilhaft bei einer Nutzung von Transpondereinrichtungen als Authentifizierungselement ist, dass die Kommunikation zwischen Lesegerät und Transpondereinrichtung kryptografisch gesichert sein kann, womit insbesondere eine Klartextübertragung des digitalen Schlüssels vermieden wird. Bei Nutzung entsprechender RFID- bzw. NFC-Chips kann zudem verhindert werden, dass Dritte den digitalen Schlüssel ohne zusätzliche Informationen auslesen können und damit Zugang zum Kraftfahrzeug erhalten. Verfahren für eine kryptografisch gesicherte Kommunikation zwischen RFID- bzw. NFC-Chips und Lesegeräten, wie beispielsweise Challenge-Response-Verfahren, sind im Stand der Technik bekannt und sollen daher nicht näher erläutert werden.

Als weitere Alternative kann als Authentifizierungselement eine separate elektrische Einrichtung genutzt werden, durch die mehrere, verschiedenen Sendungen zugeordnete Authentifizierungsinformationen gespeichert werden. Als derartige elektrische Einrichtung kann insbesondere ein mobiles Kommunikationsgerät, beispielsweise ein Smartphone, genutzt werden. Ein Zusteller kann bei Nutzung einer separaten elektrischen Einrichtung Authentifizierungsinformationen zu einer Vielzahl verschiedener Sendungen, die er zustellt, gemeinsam in einem Gerät verwalten. Zudem kann die Einrichtung zusätzliche Informationen bereitstellen, wie beispielsweise Lokalisierungsfunktionen für das Kraftfahrzeug oder Funktionen zur Erfassung einer durch die Steuereinrichtung bereitgestellte Zustellbestätigung. Die Authentifizierungsinformation kann durch die elektrische Einrichtung beispielsweise optisch über ein Display dargestellt werden, wonach sie beispielsweise durch eine Kamera des Kraftfahrzeugs erfasst werden kann. Alternativ kann die elektrische Einrichtung über eine Funkverbindung direkt mit dem Lesegerät kommunizieren.

Das Kraftfahrzeug umfasst eine Positionserfassungseinrichtung, wobei ständig oder bei Erfüllung einer vorgegebenen Übertragungsbedingung durch die Positionserfassungseinrichtung die Positionsdaten des Kraftfahrzeugs erfasst und an die Zentraleinrichtung übertragen werden, wonach die Zentraleinrichtung ein zeitabhängiges Profil der Positionsdaten speichert, wonach durch die Zentraleinrichtung bei Vorliegen einer zuzustellenden Sendung ein wahrscheinlicher Aufenthaltsort des Kraftfahrzeugs zum Lieferzeitpunkt bestimmt und für den Zusteller bereitgestellt wird. Ein entsprechendes zeitabhängiges Profil der Positionsdaten kann insbesondere voraussichtliche Positionen des Kraftfahrzeugs an verschiedenen Tagen beschreiben, wobei insbesondere zwischen Tagen unter der Woche und am Wochenende unterschieden wird, und die wahrscheinliche Position kann insbesondere tageszeitabhängig sein. Als Positionsdaten können dabei exakte Positionen des Kraftfahrzeugs gespeichert sein, es ist jedoch auch möglich als Positionsdaten nur einen Straßenzug, einen Parkplatz, ein Parkhaus oder Ähnliches zu bestimmen.

Die Positionserfassungseinrichtung kann insbesondere ein Satellitennavigationssystem sein. Ergänzend hierzu können lokale Funknetze, eine optische Erfassung von bestimmten Markierungen, eine Auswertung von Odometriedaten oder Beschleunigungssensoren oder Ähnliches genutzt werden. Entsprechende Ergänzungen der Satellitennavigationsdaten sind insbesondere vorteilhaft, wenn eine Position des Kraftfahrzeugs in einem Parkhaus oder in anderen überdachten Bereichen exakt bestimmt werden soll.

Alternativ oder ergänzend kann das zeitabhängige Profil von einem Fahrzeugnutzer selbst vorgegeben bzw. präzisiert werden. So ist es beispielsweise möglich, dass bei einem regelmäßigen Abstellen eines Kraftfahrzeugs in einem Parkhaus eine feste Parkplatznummer angegeben wird.

Als weitere Alternative kann der Fahrzeugnutzer auch für eine Lieferungen konkrete Positionsdaten und Zeitfenster für das Kraftfahrzeug vorgeben.

Die Bereitstellung des wahrscheinlichen Aufenthaltsortes kann insbesondere vor Beginn des Transports der Sendung zum Kraftfahrzeug erfolgen. Bei einer Zustellung einer Vielzahl von Sendungen zu verschiedenen Orten ist es häufig gewünscht, eine Zustellroute schon mit deutlichem zeitlichen Abstand vor Beginn des tatsächlichen Transports der Sendungen festzulegen. Durch das Vorliegen eines zeitabhängigen Profils der Positionsdaten kann auch bei einer Lieferung einer Sendung zu einem mobilen Ort, nämlich einem Kraftfahrzeug, eine derartige dem Transport vorangestellte Routenplanung bzw. -optimierung durchgeführt werden.

Ergänzend ist es möglich, dass vor oder während des Transports der Sendung zu dem Kraftfahrzeug durch die Zentraleinrichtung die momentanen Positionsdaten des Kraftfahrzeugs abgefragt und an eine weitere Kommunikationseinrichtung übertragen werden. Die weitere Kommunikationseinrichtung ist dabei insbesondere einem Zusteller zugeordnet. Eine entsprechende Abfrage der momentanen Positionsdaten kann insbesondere dann erfolgen, wenn eine entsprechende Anfrage durch den Zusteller, insbesondere über die weitere Kommunikationseinrichtung, erfolgt. Der Zusteller kann daher zu einem beliebigen Zeitpunkt seiner Lieferroute erfragen, ob sich das Kraftfahrzeug an der prognostizierten Position oder einer anderen Position befindet. Falls bei einer derartigen Anfrage keine aktuelle Position erfassbar ist bzw. wenn die momentanen Positionsdaten des Kraftfahrzeugs einen Aufenthalt in einen nicht öffentlich zugänglichen Bereich zeigen, kann der Transport der Sendung zum Kraftfahrzeug abgebrochen werden. Alternativ oder ergänzend hierzu kann ein Transport der Sendung zu einem anderen vorgegebenen Ort erfolgen. Möglichkeiten hierfür, wie beispielsweise die Lieferung an eine Wohnadresse oder zu einem anderen Kofferraum sind bereits vorangehend beschrieben.

Insbesondere bei einem Aufenthalt eines Kraftfahrzeugs in einem Parkhaus oder in anderen Bereichen, in denen Satellitennavigationsinformationen gestört sind, kann eine Position des Kraftfahrzeugs häufig nur mit einer Genauigkeit von mehreren Metern bestimmt werden. Um eine Lokalisierung des Kraftfahrzeugs, in dem die Sendung abgelegt werden soll, dennoch zu ermöglichen, können für einen Zusteller, insbesondere über eine ihm zugeordnete Kommunikationseinrichtung, weitere Informationen über das Kraftfahrzeug, wie beispielsweise ein Kennzeichen, eine Farbe oder ein Fahrzeugtyp bereitgestellt werden.

Um die Identifikation des korrekten Kraftfahrzeugs zu erleichtern, ist es möglich, dass durch das Kraftfahrzeug ein Hinweis an den Zusteller gegeben wird. Insbesondere kann durch die Zentraleinrichtung über die Kommunikationseinrichtung des Kraftfahrzeugs eine Hinweisaufforderung an die Steuereinrichtung übertragen werden, wonach diese eine Zustellerhinweiseinrichtung zur Gabe eines Hinweises an den Zusteller ansteuert. Dies ist insbesondere dann möglich, wenn der Zusteller, beispielsweise über eine ihm zugeordnete Kommunikationseinrichtung, eine entsprechende Anfrage an die Zentraleinrichtung stellt. Dabei ist es insbesondere möglich, dass durch die dem Zusteller zugeordnete Kommunikationseinrichtung die Authentifizierungsinformation der Sendung oder die daraus abgeleitete Information eingelesen wird. Damit wird zum einen automatisch eine Zuordnung der Anfrage zum richtigen Kraftfahrzeug erreicht, zum anderen dient das Erfassen der entsprechenden Information der Authentifizierung des Zustellers.

Als Zustellerhinweiseinrichtung kann insbesondere eine Hupe des Kraftfahrzeugs, eine Beleuchtungseinrichtung, insbesondere ein Blinker, eine Alarmanlage, oder Ähnliches genutzt werden. An Kraftfahrzeugen sind eine Vielzahl von optischen und/oder akustischen Hinweismitteln vorgesehen, die zusätzlich als Zustellerhinweiseinrichtung genutzt werden können.

Im erfindungsgemäßen Verfahren ist es vorteilhaft, wenn verhindert wird, dass das Kraftfahrzeug kurz vor einem Erreichen des Kraftfahrzeugs durch einen Zusteller bewegt wird, wodurch ein Ablegen der Sendung im Kraftfahrzeug zumindest temporär verhindert würde. Daher kann bei Erfüllung einer Nutzungsbedingung, die eine Absicht des Fahrers anzeigt, das Kraftfahrzeug innerhalb eines vorgegebenen weiteren Zeitintervalls und/oder nach einer Nachricht der Zentraleinrichtung zu bewegen, durch die Steuerungseinrichtung eine Fahrerhinweiseinrichtung zur Gabe eines Hinweises an den Fahrer angesteuert werden. Dabei kann insbesondere ein Zeitintervall um einen von der Zentraleinrichtung übertragenen Lieferzeitpunkt als weiteres Zeitintervall vorgegeben sein. Die Nachricht der Zentraleinrichtung kann insbesondere eine bereits erläuterte Anfrage der Zentraleinrichtung nach der momentanen Position sein, da diese typischerweise relativ kurz vor dem Erreichen des Kraftfahrzeugs durch einen Zusteller ausgesendet wird. Es ist auch möglich, dass eine derartige Nachricht der Zentraleinrichtung durch eine Anforderung durch den Zusteller über eine dem Zusteller zugeordnete Kommunikationseinrichtung ausgelöst wird. Als Hinweis an den Fahrer kann beispielsweise eine Anzeige auf einem Display genutzt werden. Dabei kann beispielsweise die Nachricht "Lieferung in fünf Minuten erwartet. Bitte warten!" angezeigt werden. Die Nutzungsbedingung kann insbesondere erfüllt sein, wenn das Kraftfahrzeug entriegelt wird, die Zündung aktiviert wird, ein Gang eingelegt wird oder Ähnliches.

Die Ermöglichung des Zugangs zu zumindest einem Teil des Fahrzeuginnenraums kann im erfindungsgemäßen Verfahren auf vielfältige Weise erfolgen. Insbesondere kann der Zugang zum Fahrzeuginnenraum durch Öffnen eines Fensters oder durch Entriegeln eines Schlosses des Kraftfahrzeugs ermöglicht werden. Das entriegelte Schloss kann beispielsweise das Schloss des Kofferraums des Kraftfahrzeugs sein. Wird der Zugang durch Öffnen eines Fensters ermöglicht, kann das Fenster insbesondere ein Fenster im Rückbankbereich des Kraftfahrzeugs und/oder ein Fenster auf der fahrerabgewandten Seite sein.

Um eine größere Akzeptanz des erfindungsgemäßen Verfahrens bei Fahrzeugnutzern zu erreichen ist es vorteilhaft, wenn der Liefervorgang für den Kraftfahrzeuginhaber dokumentiert wird. Dies ist insbesondere möglich, wenn durch eine Kamera des Kraftfahrzeugs der zugänglich gemachte Teil des Kraftfahrzeuginnenraums erfasst wird, wobei durch die Steuereinrichtung mehrere Bildaufnahmen der Kamera zwischen der Ermöglichung des Zugangs und dem Verschluss des Kraftfahrzeugs gespeichert werden. Insbesondere kann durch die Kamera eine Filmaufnahme über den Zeitraum erfolgen, in dem das Kraftfahrzeug geöffnet ist.

Daneben offenbart ist ein Kraftfahrzeug, das eine Steuerungseinrichtung, ein Lesegerät und eine Kommunikationseinrichtung umfasst, wobei die Steuerungseinrichtung zum Speichern eines von einer Zentraleinrichtung über die Kommunikationseinrichtung übertragenen digitalen Schlüssels, zum Erfassen einer der Sendung zugeordneten Authentifizierungsinformation oder einer aus der Authentifizierungsinformation abgeleiteten Information mit Hilfe des Lesegeräts, zum Ansteuern einer Fahrzeugeinrichtung zur Ermöglichung des Zugangs zu zumindest einem Teil des Kraftfahrzeuginnenraums bei Erfüllung einer sowohl die Authentifizierungsinformation bzw. die abgeleitete Information als auch den digitalen Schlüssel auswertenden Authentifizierungsbedingung, und zum Ansteuern der Fahrzeugeinrichtung und/oder einer weiteren Fahrzeugeinrichtung zum Schließen des Kraftfahrzeugs nach Ablage der Sendung in dem Kraftfahrzeug oder einer vorgegebenen Wartezeit dient. Das erfindungsgemäße Kraftfahrzeug ist zur Teilnahme am erfindungsgemäßen Verfahren geeignet.

Das Kraftfahrzeug kann insbesondere eine separat verschließbare Aufnahmevorrichtung zur Aufnahme der Sendung umfassen, die bei Erfüllung der Authentifizierungsbedingung für den Zusteller zugänglich ist. Diese kann insbesondere lösbar mit dem Kraftfahrzeug verbunden sein. Die lösbare Verbindung kann beispielsweise über eine Isofix-Verbindung an einem Rücksitz erfolgen, wie sie zur Befestigung von Kindersitzen bekannt ist. Die Aufnahmevorrichtung kann insbesondere auf einem Rücksitz oder auf dem Beifahrersitz angeordnet sein. Alternativ kann die Aufnahmevorrichtung im Kofferraum des Kraftfahrzeugs angeordnet sein.

Es ist dabei besonders vorteilhaft, wenn die Aufnahmevorrichtung bei Nichtbenutzung kompakt lagerbar ist. Daher kann die Aufnahmevorrichtung faltbar sein. Beispielsweise kann die Aufnahmevorrichtung als eine Box oder ein Netz ausgebildet sein.

Die Aufnahmeeinrichtung kann einen Verschlussmechanismus umfassen, der durch die Steuereinrichtung steuerbar ist und bei Erfüllung der Authentifizierungsbedingung durch die Steuereinrichtung gemeinsam mit dem Fahrzeugsystem angesteuert wird. Ergänzend kann der Verschlussmechanismus auch beim Schließen des Kraftfahrzeugs geschlossen werden. Ein derartiger Verschlussmechanismus kann insbesondere eine Deckel sein, der durch einen Aktor öffenbar bzw. entriegelbar ist. Die Ansteuerung kann dabei insbesondere über Funk erfolgen.

Die Aufnahmeeinrichtung kann ergänzend mit einem Alarmsystem des Kraftfahrzeugs verbunden sein, um sie insbesondere zur Lagerung von Wertsachen nutzbar zu machen. Dabei können die Wertsachen als Sendungen im Kraftfahrzeug abgelegt werden, die Aufnahmevorrichtung kann jedoch auch zur Aufnahme weiterer Wertsachen genutzt werden.

Insbesondere kann die Aufnahmeeinrichtung eine Kühleinrichtung zum Kühlen des Innenraums der Aufnahmeeinrichtung umfassen. Die Kühleinrichtung der Aufnahmeeinrichtung kann durch eine Batterie des Kraftfahrzeugs mit Energie versorgt werden. Dabei ist es möglich, dass die Steuerungseinrichtung die Energieversorgung der Kühleinrichtung derart steuert, dass eine Kühlung nur solange erfolgt, solange ausreichend Energie in einem Energiespeicher zum Starten des Kraftfahrzeugs gespeichert ist. Beispielsweise kann eine Kühlung bei einem Abfallen einer Batteriespannung unter einen vorgegebenen Grenzwert unterbrochen werden.

Die Kühleinrichtung kann insbesondere erst zu einem Zeitpunkt aktiviert werden, zu dem eine Nachricht von der Zentraleinrichtung empfangen wird. Dabei kann es sich insbesondere um eine Positionsanfrage nach der momentanen Position des Kraftfahrzeugs handeln. Alternativ kann die Kühleinrichtung auch erst bei Erfüllen der Authentifizierungsbedingung, vorgegebenen Lieferzeitpunkt oder zu einem vorgegebenen Zeitpunkt davor aktiviert werden.

Weitere Vorteile und Einzelheiten der Erfindung zeigen die folgenden Ausführungsbeispiele sowie die zugehörigen Zeichnungen. Dabei zeigen:
- Fig. 1: schematisch ein Ablaufdiagramm eines Ausführungsbeispiels des erfindungsgemäßen Verfahrens,
- Fig. 2: schematisch ein Ausführungsbeispiel eines erfindungsgemäßen Kraftfahrzeugs; und
- Fig. 3: ein weiteres Ausführungsbeispiel eines erfindungsgemäßen Kraftfahrzeugs.

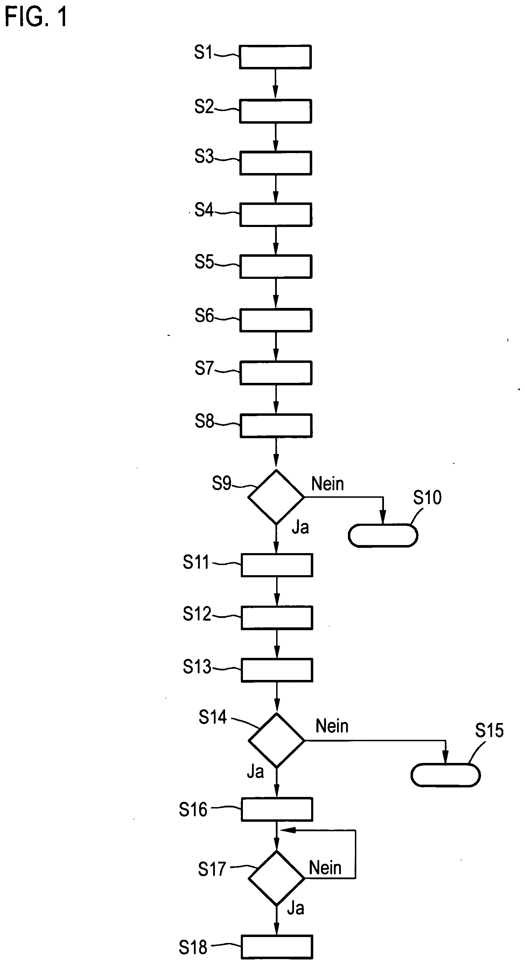

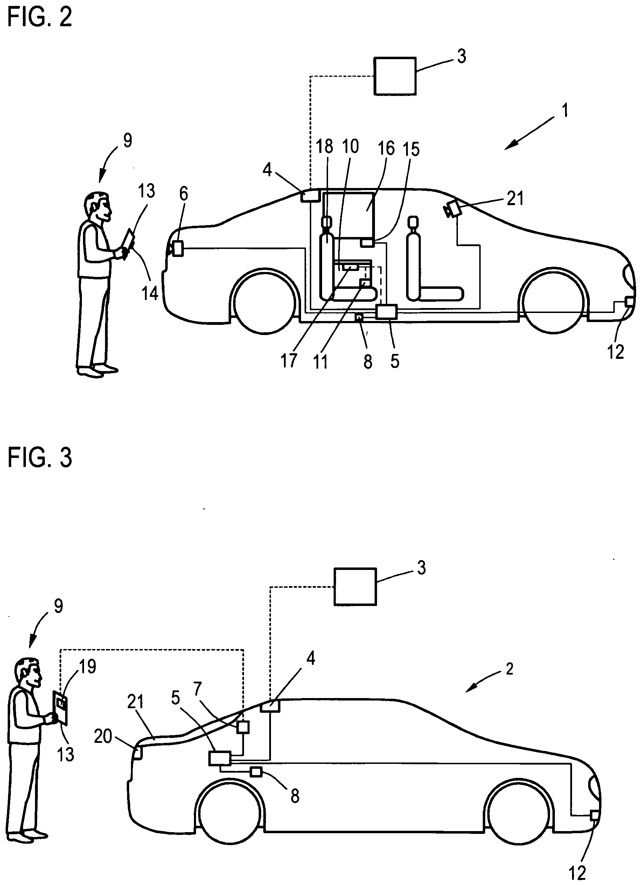

Fig. 1 zeigt schematisch ein Ablaufdiagramm eines Verfahrens zum Ablegen einer Sendung in einem Kraftfahrzeug. Das Verfahren wird im Folgenden mit Verweisen auf die in Fig. 2 und 3 gezeigten Darstellungen von im Verfahren genutzten Kraftfahrzeugen beschrieben. Die in Fig. 2 und 3 dargestellten Kraftfahrzeugen 1, 2 unterscheiden sich dabei in der Art der Ermöglichung des Zugangs zu zumindest einem Teil des Kraftfahrzeuginnenraums und in der Art der Erfassung der Authentifizierungsinformation.

Fig. 1 stellt ein Ablaufdiagramm eines Verfahrens zum Ablegen einer Sendung in einem Kraftfahrzeug dar, das mit einer Bestellung einer Sendung in einem Onlineshop in Schritt S1 beginnt. Hierzu kommuniziert der Fahrzeugnutzer oder ein vom Fahrzeugnutzer autorisierter Dritter mit einem Server des Onlineshops und gibt im Rahmen der Bestellung als Zustelladresse eine eindeutige Kraftfahrzeugidentifikation an.

Im Schritt S2 werden die Lieferdaten für die Bestellung an einen Zustelldienst übertragen. Im Rahmen der Übertragung wird als Lieferadresse die in Schritt S1 erfasste eindeutige Kraftfahrzeugidentifikation ebenfalls an den Zustelldienst übertragen. Die Datenübertragung an den Zustelldienst kann dabei insbesondere als eine Kommunikation zwischen einer dem Onlineshop zugeordneten Recheneinrichtung und einer dem Zustelldienst zugeordneten Recheneinrichtung erfolgen.

In Schritt S3 erkennt eine dem Zustelldienst zugeordnete Recheneinrichtung, dass als Adresse für eine zu liefernde Sendung eine Kraftfahrzeugidentifikation angegeben ist. Daher stellt die Recheneinrichtung des Zustelldienstes eine Anfrage an eine Zentraleinrichtung 3, die mit einer Vielzahl von Kraftfahrzeugen 1, 2 kommuniziert. Eine derartige Zentraleinrichtung 3 kann beispielsweise von dem jeweiligen Hersteller des Kraftfahrzeugs betrieben werden. Bei einer entsprechenden Anfrage erfolgt eine Authentifizierung des Rechners des Zustelldienstes durch die Zentraleinrichtung 3, um sicherzustellen, dass eine entsprechende Anfrage von einem legitimen Zustelldienst ausgeht.

Bei Vorliegen einer legitimen Anfrage, also dem Vorliegen einer abzulegenden Sendung, wird durch die Zentraleinrichtung 3 in Schritt S4 ein temporärer digitaler Schlüssel generiert, der in einem vorgegebenen Zeitintervall den Zugang zu dem Kraftfahrzeug 1 bzw. 2 erlaubt.

Der Schlüssel wird in Schritt S5 von der Zentraleinrichtung 3 zur Kommunikationseinrichtung 4 des Kraftfahrzeugs 1 bzw. 2 übertragen und dort in der Steuerungseinrichtung 5 gespeichert. Zusätzlich zu dem digitalen Schlüssel wird dabei das Zeitintervall übertragen, während dem der Schlüssel gültig ist. Alternativ wäre es möglich, das Zeitintervall im digitalen Schlüssel selbst zu codieren, oder dass die Steuereinrichtung 5 ein entsprechendes Zeitintervall selbst in Abhängigkeit des Zeitpunkts des Empfangs des digitalen Schlüssels bestimmt.

Anschließend überträgt die Zentraleinrichtung 3 eine der Sendung zugeordnete Authentifizierungsinformation an die Recheneinrichtung des Zustelldienstes. Die Art der übertragenen Authentifizierungsinformation hängt dabei insbesondere davon ab, in welcher Art eine Authentifizierung beim Ablegen der Sendung gegenüber dem Kraftfahrzeug erfolgt. Im einfachsten Fall wird als Authentifizierungsinformation der digitale Schlüssel selbst genutzt und wie später noch genauer erläutert von einem Lesegerät 6, 7 des Kraftfahrzeugs 1, 2 erfasst. In einigen Fällen kann es jedoch vorteilhaft sein, als Authentifizierungsinformation eine dem digitalen Schlüssel zugeordneten Information, beispielsweise einen zweiten Schlüssel eines Schlüsselpaars zur asymmetrischen Verschlüsselung an die Recheneinrichtung des Zustelldienstes zu übertragen.

Ergänzend zur Authentifizierungsinformation werden in Schritt S6 durch die Zentraleinrichtungen 3 voraussichtliche Aufenthaltsorte für das Kraftfahrzeug im vorgegebenen Zeitintervall an die Recheneinrichtung des Zustelldienstes übertragen. Um derartige voraussichtliche Aufenthaltsorte bereitstellen zu können, wird durch die Zentraleinrichtung 3 für jedes der am Verfahren teilnehmenden Kraftfahrzeuge 1, 2 ein zeitabhängiges Profil von Positionsdaten gespeichert. Der Aufbau und die Speicherung des zeitabhängigen Profils der Positionsdaten erfolgt, indem bei Erfüllung einer vorgegebenen Übertragungsbedingung eine Positionserfassungseinrichtung 8 des Kraftfahrzeugs 1, 2 die Positionsdaten des Kraftfahrzeugs erfasst und an die Zentraleinrichtung 3 überträgt, wonach die Zentraleinrichtung 3 ein zeitabhängiges Profil der Positionsdaten speichert. Die Übertragungsbedingung ist erfüllt, wenn das Kraftfahrzeug für eine vorgegebene Mindestzeit, nämlich 10 Minuten, steht, und eine Positionsübertragung durch einen Benutzer des Kraftfahrzeugs nicht abgeschaltet ist.

Durch die wiederholte Übertragung von Positionsdaten zu einer Vielzahl von Zeitpunkten werden Positionen erfasst, an denen das Kraftfahrzeug häufig abgestellt ist. Durch eine Auswertung der derart übertragenen Positionsdaten bezüglich der Tageszeiten bzw. Tage, an denen sie übertragen wurden, kann die Zentraleinrichtung 3 abhängig von Tag und Uhrzeit eine Voraussage über den voraussichtlichen Standort des Kraftfahrzeugs treffen. Eine derartige Voraussage wird für wenigstens einen Zeitpunkt innerhalb des vorgegebenen Zeitintervalls von der Zentraleinrichtung 3 an die Recheneinrichtung des Zustelldienstes übertragen, womit bei der Routenplanung durch den Zustelldienst der voraussichtliche Standort des Kraftfahrzeugs berücksichtigt werden kann. Alternativ wäre es möglich, dass ein Fahrzeugnutzer, das wie beschrieben automatisch erfasste zeitabhängige Profil der Positionsdaten ergänzt oder das er einen oder mehrere Zeitpunkte und Orte vorgibt, an denen eine Lieferung zum Kraftfahrzeug möglich ist.

In Schritt S7 wird durch den Zustelldienst die von der Zentraleinrichtung 3 empfangene Authentifizierungsinformation auf ein Authentifizierungselement übertragen. Dabei können in Abhängigkeit der im Kraftfahrzeug 1, 2 vorgesehenen Lesegeräte 6, 7 verschiedene Authentifizierungselemente genutzt werden. Soll eine Sendung im Kraftfahrzeug 1 abgelegt werden, das als Lesegerät 6 eine Kamera umfasst, so ist das Authentifizierungselement eine auf die Sendung aufgebrachte optische Codierung der Authentifizierungsinformation. Dabei wird der digitale Schlüssel, also die Authentifizierungsinformation, in diesem Fall als zweidimensionales Muster mit zwei Tonwerten, nämlich als QR Code®, auf die Sendung aufgebracht. Soll die Sendung im Kraftfahrzeug 2 abgelegt werden, das als Lesegerät 7 ein RFID-Lesegerät umfasst, so wird an der Sendung ein RFID-Chip angebracht, in dem die Authentifizierungsinformation gespeichert ist, indem ein Etikett, das diesen Chip umfasst, auf die Sendung aufgeklebt wird.

In Schritt S8 wird die Sendung zum Kraftfahrzeug transportiert. Hierzu wird zunächst eine Route geplant, die davon ausgeht, dass sich das Kraftfahrzeug zu der Zeit, zu der es voraussichtlich erreicht wird, an der durch die Zentraleinrichtung 3 übertragenen wahrscheinlichen Position befindet. Eine vorgegebene Zeit vor Erreichen dieser Position wird durch einen Zusteller 9 über eine Kommunikationseinrichtung, nämlich ein Smartphone, eine Anfrage an die Zentraleinrichtung 3 bezüglich der momentanen Position des Kraftfahrzeugs geschickt. Bei Eingang dieser Anfrage fragt die Zentraleinrichtung 3 über die Kommunikationseinrichtung 4 des Kraftfahrzeugs 1, 2 die momentane Position des Kraftfahrzeugs 1, 2 ab, die über den Positionssensor 8 erfasst und über die Steuerungseinrichtung 5 bereitgestellt wird. Ist zum Anfragezeitpunkt durch die Positionserfassungseinrichtung 8 keine momentane Position erfassbar, beispielsweise da keine Navigationssignale von Satelliten empfangen werden, kann durch die Steuerungseinrichtung 5 in Abhängigkeit von Werten von weiteren nicht gezeigten Sensoren, wie beispielsweise Beschleunigungssensoren, aus einer vorangehend erfassten Position eine momentane Position prognostiziert werden. Alternativ kann die Steuerungseinrichtung 5 über die Kommunikationsvorrichtung 4 in diesem Fall die letzte bekannte Position des Kraftfahrzeugs 1, 2 an die Zentraleinrichtung 3 übertragen. Die Zentraleinrichtung 3 kann die vom Kraftfahrzeug 1, 2 übertragene Positionsinformation unter Umständen aus einem in der Zentraleinrichtung 3 gespeichertem Kraftfahrzeugprofil ergänzen. Beispielsweise kann erkannt werden, dass eine letzte bekannte Position der Einfahrt eines Parkhauses zugeordnet ist und es kann im Kraftfahrzeugprofil ein vorgegebener Stelleplatz innerhalb dieses Parkhauses gespeichert sein.

In Schritt S9 wird überprüft, ob durch die Zentraleinrichtung eine momentane Position bereitgestellt wurde. Ist dies nicht der Fall, so wird in Schritt S10 der Zustellvorgang abgebrochen oder es wird eine alternative Zustellmöglichkeit für die Zustellung, also beispielsweise eine Zustellung zur Heimatadresse des Fahrzeugnutzers, genutzt. Zur Bestimmung einer alternativen Zustellmöglichkeit kann die Zentraleinrichtung 3 eine entsprechend einem in der Zentraleinrichtung 3 gespeicherten Kraftfahrzeugprofil gewählte alternative Zustellmöglichkeitsinformation übertragen. Ist eine solche alternative Zustellmöglichkeit nicht vorgesehen, so endet das Verfahren mit einem Abbruch des Zustellversuchs.

Falls in Schritt S9 jedoch ermittelt wurde, dass eine momentane Position des Kraftfahrzeugs bestimmbar ist, so wird in Schritt S1 der Transport der Sendung zum Kraftfahrzeug in Schritt S11 fortgesetzt, bis sich die Sendung im Bereich des Kraftfahrzeugs befindet. Werden verderbliche Waren geliefert und umfasst das Kraftfahrzeug 1 eine separat verschließbare Aufnahmevorrichtung 10 mit einer Kühleinrichtung 11, so kann die Zentraleinrichtung 3 zudem über die Kommunikationseinrichtung 4 eine Anweisung an die Steuerungseinrichtung 5 übertragen, die Kühleinrichtung 11 zu aktivieren. Die Kühleinrichtung 11 wird dabei aus dem Bordnetz des Kraftfahrzeugs 1 versorgt. Die Kommunikation mit der Steuerungseinrichtung 5 erfolgt über Funk.

Bei einem Aufenthalt des Kraftfahrzeugs auf großen Parkflächen, in denen insbesondere der Empfang von Satellitennavigationssignalen gestört ist, beispielsweise in Tiefgaragen, kann, auch wenn dem Zusteller 9 das Kennzeichen des Kraftfahrzeugs und/oder dessen Farbe und Typ bekannt ist, die Zustellung sehr zeitraubend sein, da das Kräftfahrzeug zunächst gesucht werden muss. In entsprechenden Situationen sendet der Zusteller 9 über eine Kommunikationseinrichtung in Schritt S12 eine Aufforderung, eine Hinweisaufforderung zu übertragen, an die Steuereinrichtung 5. Bei Empfang einer derartigen Hinweisaufforderung über die Kommunikationseinrichtung 4 des Kraftfahrzeugs 1, 2 steuert die Steuerungseinrichtung 5 eine Zustellerhinweiseinrichtung 12, nämlich einen Blinker des Kraftfahrzeugs zur Gabe eines Hinweises an den Zusteller an. Der Zusteller kann damit das Kraftfahrzeug 1, 2 leicht erkennen und sich dem Kraftfahrzeug 1, 2 nähern.

In Schritt S13 wird die der Sendung zugeordnete Authentifizierungsinformation bzw. eine daraus abgeleitete Information durch das Lesegerät 6, 7 des Kraftfahrzeugs 1, 2 erfasst und in Schritt S14 wird überprüft, ob eine Authentifizierungsbedingung, die Authentifizierungsinformation bzw. die daraus abgeleitete Information sowie den digitalen Schlüssel auswertet, erfüllt ist. Dieser Vorgang sowie das Öffnen des Kraftfahrzeugs 1, 2 ist für das Kraftfahrzeug 1 deutlich unterschiedlich zum Vorgang für das Kraftfahrzeug 2. Daher sollen diese beiden Vorgänge im Folgenden separat für die Kraftfahrzeuge 1, 2 erläutert werden.

Im Kraftfahrzeug 1, das in Fig. 2 gezeigt ist, ist das Lesegerät 6 eine Kamera. Die Authentifizierungsinformation entspricht dem digitalen Schlüssel und ist in Form einer optischen Kodierung 14, nämlich eines QR Code® auf die Sendung 13 aufgebracht. Um Zugang zum Innenraum des Kraftfahrzeugs 1 zu erhalten, hält der Zusteller 9 die Sendung 13 derart vor das Lesegerät 6, dass die optische Kodierung 14 von dem Lesegerät 6 optisch erfasst wird. Die Bilder der Kamera, also des Lesegeräts 6, werden durch die Steuerungseinrichtung 5 verarbeitet und es wird erkannt, wenn eine entsprechende optische Kodierung 14 im Bildbereich liegt. Wird eine optische Kodierung 14 im Bildbereich erkannt, so wird diese als Authentifizierungsinformation erfasst, die dem digitalen Schlüssel entspricht und mit dem in der Steuerungseinrichtung 5 gespeicherten digitalen Schlüssel verglichen.

In Schritt S14 wird überprüft, ob der gespeicherte digitale Schlüssel mit der erfassten Authentifizierungsinformation übereinstimmt. Ist dies nicht der Fall, so endet das Verfahren mit Schritt S15 und das Kraftfahrzeug wird nicht geöffnet. Dies ist beispielsweise möglich, wenn das Authentifizierungselement im Rahmen des Transports der Sendung beschädigt oder der digitale Schlüssel nicht korrekt übertragen wurde. In diesem Fall muss die Lieferung der Sendung entweder abgebrochen werden, oder es muss, wie zu Schritt S10 erläutert, auf eine alternative Zustellmöglichkeit, beispielsweise eine Lieferung zur Wohnadresse des Fahrzeugnutzers, zurückgegriffen werden.

Stimmen die Authentifizierungsinformation und der gespeicherte digitale Schlüssel jedoch überein, so wird in Schritt S16 die Fahrzeugeinrichtung 15, nämlich ein dem Fenster 16 zugeordneter Fensterheber, angesteuert, womit das Fenster 16 geöffnet wird. Dem Zusteller 9 wird Zugang zu einem Teil des Kraftfahrzeuginnenraums gewährt. Das Ablegen der Sendung soll im Kraftfahrzeug 1 in der am Rücksitz 18 mit einer Isofix-Befestigung befestigten separat verschließbaren Aufnahmeeinrichtung 10 erfolgen. Die Aufnahmevorrichtung 10 weist dabei einen Verschlussmechanismus 17 auf, der die Aufnahmevorrichtung 10 verschließt. Durch die Steuerungseinrichtung 5 wird dieser über ein Funksignal gleichzeitig mit dem Fensterheber angesteuert, um die separat verschließbare Aufnahmevorrichtung 10 zu öffnen. Der Zusteller 9 kann die Sendung 13 anschließend durch das Fenster 16 in die separat verschließbare Aufnahmevorrichtung 10 legen.

Im in Fig. 3 gezeigten Kraftfahrzeug 2 ist der Ablauf der zuvor erläuterten Schritte etwas anders, da als Authentifizierungselement 19 der Sendung 13 ein RFID-Chip genutzt wird, womit die Authentifizierung am Kraftfahrzeug 2 unterschiedlich verläuft. Zudem ist ein Ablegen der Sendung 13 im Kofferraum des Kraftahrzeugs 2 vorgesehen ist. Das Lesegerät 7 des Kraftfahrzeugs 2 und das Authentifizierungselement 19, also der RFID-Chip, nutzen ein kryptografisches Sicherungsverfahren. Im Stand der Technik sind eine Vielzahl derartiger Verfahren bekannt, wobei beispielsweise als Authentifizierungsinformation und digitaler Schlüssel ein symmetrisches Schlüsselpaar verwendet werden kann. Im Kraftfahrzeug 2 wird ein relativ einfaches Verfahren genutzt, bei dem die Authentifizierungsinformation gleich dem digitalen Schlüssel ist. In Schritt S13 werden durch die Steuerungseinrichtung 5 bei Erfassung eines Authentifizierungselements 19 im Empfangsbereich des Lesegeräts 7 digitale Zufallsdaten bereitgestellt, die vom Lesegerät 7 an den RFID-Chip übertragen werden. Durch den RFID-Chip werden die Zufallsdaten mit der Authentifizierungsinformation verschlüsselt und aus den verschlüsselten Daten wird ein Hash-Wert gebildet. Dieser Hash-Wert wird durch den RFID-Chip zurück an das Lesegerät 7 übertragen und von diesem als aus der Authentifizierungsinformation abgeleitete Information erfasst.

In Schritt S14 wird anschließend überprüft, ob die Authentifizierungsbedingung erfüllt ist. Hierzu werden die Zufallsdaten durch die Steuerungseinrichtung mit dem in der Steuerungseinrichtung gespeicherten digitalen Schlüssel verschlüsselt und es wird ebenfalls ein Hash-Wert gebildet. Stimmt der in Schritt S13 als die aus der Authentifizierungsinformation abgeleitete Information erfasste Hash-Wert mit dem durch die Steuerungseinrichtung 5 selbst berechneten Hash-Wert überein, so ist die Authentifizierungsbedingung erfüllt und das Verfahren wird mit Schritt S16 und damit der Ermöglichung des Zugangs zu einem Teil des Kraftfahrzeuginnenraums fortgesetzt. Ist die Authentifizierungsbedingung nicht erfüllt, stimmen die Hash-Werte also nicht überein, so wird das Verfahren mit Schritt S15, wie bereits erläutert, abgebrochen.

Wird in Schritt S14 ermittelt, dass die Authentifizierungsbedingung erfüllt ist, so wird in Schritt S16 die Fahrzeugeinrichtung 20, ein Kofferraumschloss des Kraftfahrzeugs 2, durch die Steuerungseinrichtung 5 angesteuert. Damit kann der Zusteller 9 den Kofferraumdeckel 21 des Kraftfahrzeugs 2 öffnen und die Sendung 13 im Kofferraum des Kraftfahrzeugs 2 ablegen.

In beiden erläuterten Fällen wird in Schritt S17 überprüft, ob die Sendung bereits im Kraftfahrzeug abgelegt wurde bzw. ob eine vorgegebene Wartezeit verstrichen ist. Während dieser Zeit wird im Kraftfahrzeug 1 durch die Kamera 21 der zugänglich gemachte Teil des Kraftfahrzeuginnenraums des Kraftfahrzeugs 1 erfasst und ein Film dieses Zeitraums wird in der Steuerungseinrichtung 5 gespeichert, um es dem Fahrzeugnutzer möglich zu machen, den Ablagevorgang der Sendung 13 nachzuvollziehen. Durch die Kamera 21 und eine Bildverarbeitung in der Steuerungseinrichtung 5 wird zudem erkannt, ob die Sendung 13 bereits in die Aufnahmevorrichtung 10 gelegt wurde. Wurde ein Ablegen der Sendung 13 in die Aufnahmevorrichtung 10 erkannt, und zudem, dass alle Gliedmaßen des Zustellers 9 den Kraftfahrzeuginnenraum verlassen haben, so wird das Kraftfahrzeug geschlossen. Sowohl im Kraftfahrzeug 1 als auch im Kraftfahrzeug 2 wird das Kraftfahrzeug geschlossen, wenn die vorgegebene Wartezeit überschritten ist. Solange diese beiden Bedingungen nicht erfüllt sind, wird Schritt S17 wiederholt. Sobald sie erfüllt sind wird in Schritt S18 das Kraftfahrzeug geschlossen.

Hierzu wird in Kraftfahrzeug 1 durch die Steuerungseinrichtung 5 der Fensterheber angesteuert, um das Fenster 16 zu schließen. Zudem wird der Verschlussmechanismus 17 der Aufnahmevorrichtung 10 angesteuert, um den Deckel der Aufnahmevorrichtung zu schließen. Im Kraftfahrzeug 2 wird das Kofferraumschloss 20 verriegelt. Zudem wird durch einen nicht gezeigten Aktor der Deckel 21 des Kofferraums geschlossen. Nach dem Schließen des Kraftfahrzeugs wird durch die Kommunikationseinrichtung 4 eine Nachricht an die Zentraleinrichtung 3 gesendet, um zum einen das Ablegen der Sendung im Kraftfahrzeug zu bestätigen, zum anderen das Auslösen einer Benachrichtigung an den Fahrzeugnutzer durch eine E-Mail oder eine SMS auszulösen.

## Patentansprüche

1. Verfahren zum Ablegen einer Sendung in einem Kraftfahrzeug, umfassend die folgenden Schritte:
- Generieren eines temporären digitalen Schlüssels, der in einem vorgegebenen Zeitintervall einmalig oder mehrmals Zugang zu dem Kraftfahrzeug erlaubt, durch eine Zentraleinrichtung,
- Übertragen des digitalen Schlüssels über eine Kommunikationseinrichtung des Kraftfahrzeugs an eine Steuerungseinrichtung des Kraftfahrzeugs und Speichern des Schlüssels in der Steuerungseinrichtung,
- Übertragen einer der Sendung zugeordneten Authentifizierungsinformation, die dem digitalen Schlüssel oder einer dem digitalen Schlüssel zugeordneten Information entspricht, auf ein Authentifizierungselement,
- Transport der Sendung zum Kraftfahrzeug,
- Erfassen der Authentifizierungsinformation oder einer aus der Authentifizierungsinformation abgeleiteten Information durch ein Lesegerät des Kraftfahrzeugs,
- Ansteuern einer Fahrzeugeinrichtung zur Ermöglichung des Zugangs zu zumindest einem Teil des Kraftfahrzeuginnenraums durch die Steuerungseinrichtung bei Erfüllung einer sowohl die Authentifizierungsinformation bzw. die abgeleitete Information als auch den digitalen Schlüssel auswertenden Authentifizierungsbedingung, und
- Ansteuern der Fahrzeugeinrichtung und/oder einer weiteren Fahrzeugeinrichtung zum Schließen des Kraftfahrzeugs nach dem Ablegen der Sendung in dem Kraftfahrzeug oder nach einer vorgegebenen Wartezeit,
wobei das Kraftfahrzeug eine Positionserfassungseinrichtung umfasst, wobei ständig oder bei Erfüllung einer vorgegebenen Übertragungsbedingung durch die Positionserfassungseinrichtung die Positionsdaten des Kraftfahrzeugs erfasst und an die Zentraleinrichtung übertragen werden, wonach die Zentraleinrichtung ein zeitabhängiges Profil der Positionsdaten speichert, wonach durch die Zentraleinrichtung bei Vorliegen einer zuzustellenden Sendung ein wahrscheinlicher Aufenthaltsort des Kraftfahrzeugs zum Lieferzeitpunkt bestimmt und für den Zusteller bereitstellt wird.

2. Verfahren nach Anspruch 1,
**dadurch gekennzeichnet, dass** als Authentifizierungselement eine auf die Sendung aufgebrachte optische Kodierung der Authentifizierungsinformation genutzt wird, wobei die Authentifizierungsinformation durch das Lesegerät optisch erfasst wird.

3. Verfahren nach Anspruch 2,
**dadurch gekennzeichnet,**
**dass** als Authentifizierungselement der digitale Schlüssel als eindimensionales oder zweidimensionales Muster mit insbesondere zwei Tonwerten auf die Sendung aufgebracht wird.

4. Verfahren nach Anspruch 1,
**dadurch gekennzeichnet, dass** als Authentifizierungselement eine der Sendung zugeordnete Transpondereinrichtung genutzt wird, wobei die Authentifizierungsinformation bzw. die abgeleitete Information durch eine Kommunikation des Lesegeräts mit der Transpondereirichtung erfasst wird.

5. Verfahren nach Anspruch 4,
**dadurch gekennzeichnet,**
**dass** als Transpondereinrichtung ein RFID-Chip oder ein NFC-Chip genutzt wird.

6. Verfahren nach Anspruch 1,
**dadurch gekennzeichnet,**
**dass** als Authentifizierungselement eine separate elektrische Einrichtung genutzt wird, durch die mehrere, verschiedenen Sendungen zugeordnete Authentifizierungsinformationen gespeichert werden.

7. Verfahren nach einem der vorangehenden Ansprüche,
**dadurch gekennzeichnet,**
**dass** vor oder während des Transports der Sendung zum Kraftfahrzeug durch die Zentraleinrichtung die momentanen Positionsdaten des Kraftfahrzeugs abgefragt und an eine weitere Kommunikationseinrichtung übertragen werden.

8. Verfahren nach einem der vorangehenden Ansprüche,
**dadurch gekennzeichnet, dass** durch die Zentraleinrichtung über die Kommunikationseinrichtung des Kraftfahrzeugs eine Hinweisaufforderung an die Steuerungseinrichtung übertragen wird, wonach diese eine Zustellerhinweiseinrichtung zur Gabe eines Hinweises an einen Zusteller ansteuert.

9. Verfahren nach einem der vorangehenden Ansprüche,
**dadurch gekennzeichnet,**
**dass** bei Erfüllung einer Nutzungsbedingung, die eine Absicht des Fahrers anzeigt, das Kraftfahrzeug innerhalb eines vorgegebenen weiteren Zeitintervalls und/oder nach einer Nachricht der Zentraleinrichtung zu bewegen, durch die Steuerungseinrichtung eine Fahrerhinweiseinrichtung zur Gabe eines Hinweises an den Fahrer angesteuert wird.

10. Verfahren nach einem der vorangehenden Ansprüche,
**dadurch gekennzeichnet,**
**dass** der Zugang zum Fahrzeuginnenraum durch Öffnen eines Fensters oder Entriegeln eines Schlosses des Kraftfahrzeugs ermöglicht wird.

11. Verfahren nach einem der vorangehenden Ansprüche, **dadurch gekennzeichnet, dass** durch eine Kamera des Kraftfahrzeugs der zugänglich gemachte Teil des Kraftfahrzeuginnenraums erfasst wird, wobei durch die Steuerungseinrichtung mehrere Bildaufnahmen der Kamera zwischen der Ermöglichung des Zugangs und dem Schließen des Kraftfahrzeugs gespeichert werden.

12. Verfahren nach einem der vorangehenden Ansprüche,
**dadurch gekennzeichnet,**
**dass** die Sendung in einem Kraftfahrzeug (1) abgelegt wird, das eine separat verschließbare Aufnahmevorrichtung (10) zur Aufnahme der Sendung (13) umfasst, die bei Erfüllung der Authentifizierungsbedingung für den Zusteller (9) zugänglich ist.

13. Verfahren nach Anspruch 12,
**dadurch gekennzeichnet,**
**dass** die Aufnahmeeinrichtung (10) einen Verschlussmechanismus (27) umfasst, der durch die Steuerungseinrichtung (5) steuerbar ist und bei Erfüllung der Authentifizierungsbedingung durch die Steuerungseinrichtung (5) gemeinsam mit dem Fahrzeugsystem (15, 20) angesteuert wird.

14. Verfahren nach Anspruch 12 oder 13,
**dadurch gekennzeichnet,**
**dass** die Aufnahmeeinrichtung (10) eine Kühleinrichtung (11) zur Kühlung des Innenraums der Aufnahmeeinrichtung (10) umfasst.

## Claims

1. Method for depositing a parcel delivery in a motor vehicle, comprising the following steps:
- generating a temporary digital key which allows access once or several times to the motor vehicle within a predetermined time interval by a central device,
- transmitting the digital key via a communication device of the motor vehicle to a control device of the motor vehicle and storing the key in the control device,
- transmitting authentication information which is associated with the parcel delivery and which corresponds to the digital key or to information associated with the digital key, to an authentication element,
- transporting the parcel to the motor vehicle,
- acquiring the authentication information or information derived from the authentication information using a reader of the motor vehicle,
- activating a vehicle system to enable access to at least one part of the interior of the motor vehicle by the control device upon satisfying an authentication condition which evaluates the authentication information or the derived information as well as the digital key, and
- activating the vehicle system and/or a further vehicle system to close the motor vehicle after the parcel has been deposited in the motor vehicle or after a predetermined waiting time,
wherein the motor vehicle comprises a position detecting device, wherein the positional data of the motor vehicle are detected and transmitted to the central device by the position detecting device continuously or upon satisfying a predetermined transmission condition, whereupon the central device stores a time-dependent profile of the positional data, whereupon if there is a parcel to be delivered, a probable location of the motor vehicle at the time of delivery is determined and is provided to the delivery agent by the central device.

2. Method according to claim 1,
**characterised in that**
an optical encoding of the authentication information, applied to the parcel delivery, is used as the authentication element, wherein the authentication information is optically detected by the reader.

3. Method according to claim 2,
**characterised in that**
the digital key is applied to the parcel delivery as a one-dimensional or two-dimensional pattern with in particular two tonal values as the authentication element.

4. Method according to claim 1,
**characterised in that**
a transponder device associated with the parcel delivery is used as the authentication element, wherein the authentication information or the derived information is detected by a communication of the reader with the transponder device.

5. Method according to claim 4,
**characterised in that**
an RFID chip or an NFC chip is used as the transponder device.

6. Method according to claim 1,
**characterised in that**
a separate electrical device is used as the authentication element which stores a plurality of items of authentication information associated with different deliveries.

7. Method according to any one of the preceding claims,
**characterised in that**
before or during the transportation of the parcel to the motor vehicle, the current positional data of the motor vehicle are requested by the central device and are transmitted to a further communication device.

8. Method according to any one of the preceding claims,
**characterised in that**
an indication request is transmitted to the control device by the central device via the communication device of the motor vehicle, whereupon the control device activates a delivery agent indication device to give a sign to a delivery agent.

9. Method according to any one of the preceding claims,
**characterised in that**
upon satisfying a use condition which indicates the driver's intention to move the motor vehicle within a predetermined further time interval around a delivery time transmitted by the central device and/or after a message from the central device, a driver indicator device is activated by the control device to give a sign to the driver.

10. Method according to any one of the preceding claims,
**characterised in that**
access to the interior of the vehicle is enabled by opening a window or releasing a lock of the motor vehicle.

11. Method according to any one of the preceding claims,
**characterised in that**
the part of the motor vehicle interior which has been made accessible is recorded by a camera of the motor vehicle, wherein a plurality of image recordings by the camera are stored by the control device between access to the motor vehicle being enabled and closure of the motor vehicle.

12. Method according to any one of the preceding claims,
**characterised in that**
the parcel is deposited in a motor vehicle (1) which comprises a separately closable receiving device (10) for receiving the parcel delivery (13) which is accessible to the delivery agent (9) upon satisfying the authentication condition.

13. Method according to claim 12,
**characterised in that**
the receiving device (10) comprises a closure mechanism (27) which can be controlled by the control device (5) and is activated by the control device (5) together with the vehicle system (15, 20) when the authentication condition has been satisfied.

14. Method according to claim 12 or 13,
**characterised in that**
the receiving device (10) comprises a cooling device (11) for cooling the interior of the receiving device (10).

## Revendications

1. Procédé pour déposer un envoi dans un véhicule automobile, comprenant les étapes suivantes :
- générer par un dispositif central une clé numérique temporaire, qui permet un accès au véhicule automobile une fois ou plusieurs fois dans un intervalle de temps prédéterminé,
- transmettre la clé numérique par l'intermédiaire d'un dispositif de communication du véhicule automobile à un dispositif de commande du véhicule automobile et mémoriser la clé dans le dispositif de commande,
- transmettre une information d'authentification associée à l'envoi, laquelle correspond à la clé numérique ou à une information associée à la clé numérique, sur un élément d'authentification,
- transporter l'envoi jusqu'au véhicule automobile,
- détecter par un dispositif de lecture du véhicule automobile l'information d'authentification ou une information déduite de l'information d'authentification,
- commander par le dispositif de commande un dispositif de véhicule afin de permettre l'accès à au moins une partie de l'habitacle de véhicule automobile, lorsque est satisfaite une condition d'authentification évaluant aussi bien l'information d'authentification ou l'information déduite que la clé numérique, et
- commander le dispositif de véhicule et/ou un autre dispositif de véhicule afin de fermer le véhicule automobile après avoir déposé l'envoi dans le véhicule automobile ou après un temps d'attente prédéterminé,
dans lequel le véhicule automobile comprend un dispositif de détection de position, dans lequel, en permanence ou lorsqu'une condition de transmission prédéterminée est satisfaite, les données de position du véhicule automobile sont détectées par le dispositif de détection de position et sont transmises au dispositif central, après quoi le dispositif central mémorise un profil des données de position en fonction du temps, après quoi le dispositif central détermine en présence d'un envoi à délivrer un lieu d'arrêt probable du véhicule automobile à l'instant de livraison et le met à disposition du livreur.

2. Procédé selon la revendication 1, **caractérisé en ce que**, comme élément d'authentification, on utilise un codage optique, appliqué sur l'envoi, de l'information d'authentification, laquelle information d'authentification est détectée optiquement par l'appareil de lecture.

3. Procédé selon la revendication 2, **caractérisé en ce que**, comme élément d'authentification, on applique sur l'envoi la clé numérique sous forme de motif monodimensionnel ou bidimensionnel avec en particulier deux teintes.

4. Procédé selon la revendication 1, **caractérisé en ce que**, comme élément d'authentification, on utilise un transpondeur associé à l'envoi, l'information d'authentification ou l'information déduite étant détectée par une communication de l'appareil de lecture avec le transpondeur.

5. Procédé selon la revendication 4, **caractérisé en ce que**, comme transpondeur, on utilise une puce RFID ou une puce NFC.

6. Procédé selon la revendication 1, **caractérisé en ce que**, comme élément d'authentification, on utilise un dispositif électrique séparé par lequel sont mémorisées plusieurs informations d'authentification associées à des envois différents.

7. Procédé selon l'une quelconque des revendications précédentes, **caractérisé en ce que**, avant ou après le transport de l'envoi jusqu'au véhicule automobile, le dispositif central interroge les données de position momentanées du véhicule automobile et les transmet à un autre dispositif de communication.

8. Procédé selon l'une quelconque des revendications précédentes, **caractérisé en ce que** le dispositif central transmet par l'intermédiaire du dispositif de communication du véhicule automobile une demande d'information au dispositif de commande, après quoi ce dernier commande un dispositif d'information de livreur afin de donner une information à un livreur.

9. Procédé selon l'une quelconque des revendications précédentes, **caractérisé en ce que**, lorsque est satisfaite une condition d'utilisation qui indique une intention du conducteur de déplacer le véhicule automobile pendant un autre intervalle de temps prédéterminé et/ou après un message du dispositif central, un dispositif d'information de conducteur est commandé par le dispositif de commande pour donner une information au conducteur.

10. Procédé selon l'une quelconque des revendications précédentes, **caractérisé en ce que** l'accès à l'habitacle de véhicule est permis par l'ouverture d'une fenêtre ou le déverrouillage d'une serrure du véhicule automobile.

11. Procédé selon l'une quelconque des revendications précédentes, **caractérisé en ce que** la partie rendue accessible de l'habitacle de véhicule est détectée par une caméra du véhicule automobile, plusieurs enregistrements d'images de la caméra étant mémorisés par le dispositif de commande entre la permission d'accès et la fermeture du véhicule automobile.

12. Procédé selon l'une quelconque des revendications précédentes, **caractérisé en ce que** l'envoi est déposé dans un véhicule automobile (1) qui comprend un dispositif de réception (10) qui est destiné à recevoir l'envoi (13), qui peut être fermé séparément et qui est accessible au livreur (9) lorsque la condition d'authentification est satisfaite.

13. Procédé selon la revendication 12, **caractérisé en ce que** le dispositif de réception (10) comprend un mécanisme de fermeture (27) qui peut être commandé par le dispositif de commande (5) et qui est commandé par le dispositif de commande (5) conjointement au système de véhicule (15, 20) lorsque la condition d'authentification est satisfaite.

14. Procédé selon la revendication 12 ou 13, **caractérisé en ce que** le dispositif de réception (10) comprend un dispositif de refroidissement (11) pour refroidir l'espace intérieur du dispositif de réception (10).
